# EUROPEAN PATENT APPLICATION

(11) **EP 1 630 412 A1**
(43) Date of publication of application: **01.03.2006**
(21) Application number: 05255333.6
(22) Date of filing: 31.08.2005
(51) Int. Cl.: F02N 11/00, F02D 41/22

(54) **Engine start control device and control method**

(30) Priority: 31.08.2004 JP 2004253139
(71) Applicant: Nissan Technology Centre Europe Limited, Bedfordshire MK43 0BD (GB)
(72) Inventor: Eguchi, Takashi, Kanagawa 251-0047 (JP); Ino, Junsuke, Kanagawa 242-0001 (JP); Koike, Rei, Kanagawa 228-0013 (JP); Asada, Tetsuya, Kawagana 259-1324 (JP)
(74) Representative: Holmes, Matthew William

(57) **Abstract**

An engine start control apparatus and method for use in a vehicle equipped with a driver-operated pushbutton switch (27) that generates a command to activate the starter motor (139) of an engine. The apparatus includes a first starter switching element (131) and a second starter switching element (152) connected in series in a power supply circuit for providing power to the starter motor (139). A first controller (126) that sequentially turns on and off the first starter switching element (131) and the second starter switching element (152) based on the operation of the switch (127). A voltage detection means (144) has an input coupled to a connection point (P) between the first starter switching element (131) and the second starter switching element (152) and an output indicative of the voltage at the connection point (P). A second control means (126) has an input responsive to the output of the voltage detection means (144) and has an output providing an indication of the existence of abnormalities in the first starter switching element (131) and the second starter switching element (152) based on the voltage at the connection point (P).

## Description

### FIELD OF THE INVENTION

The present invention pertains to an engine start control device and an engine start control method for starting a vehicle engine.

### BACKGROUND OF THE INVENTION

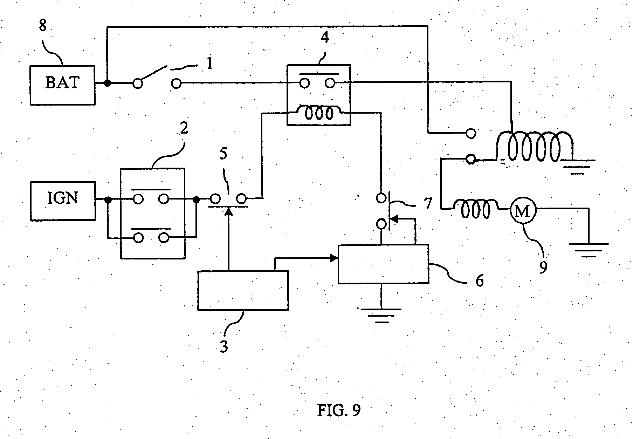

One example of a starter commonly used previously to start an engine is shown in Figure 9. The starter has an ignition switch 1 for mechanical operations and an inhibitor switch 2 for electronic operations. A control unit 3 turns ON a switch 5 on the upstream side installed between the inhibitor switch 2 and a starter relay switch 4 coil when the inhibitor switch 2 is in the park or neutral position while power is being supplied to the ignition (when a key switch is in the ignition ON position). On the other hand, a switch 7 downstream installed between the starter relay 4 coil and a control circuit 6 is controlled by the control circuit 6. The switch 7 is ON under normal conditions, but the switch 7 downstream is turned OFF when an abnormal signal is input from other control units.

A control unit 3 turns ON the switch 5 upstream and the control circuit 6 turns ON the switch 7 downstream when, as described above, the inhibitor switch 2 is in the park or neutral position while no abnormal signal is input from other control units and power is supplied to the ignition (the key switch is in the ignition ON position). By this set of circumstances, the ignition power is allowed to flow to the starter relay 4 coil.

Then by rotating the key inserted into a key cylinder under the circumstances to the start position, the starter relay 4 switch is turned ON by the electrical power from a battery 8, the starter motor 9 connected to this starter relay 4 is activated and the engine starts since electrical power is flowing through the starter relay 4 coil.

Such a conventional starter needs a fault detecting circuit in order to assure reliability in the inhibitor switch 2 that conducts electronic operations. A break in the line was previously detected by the control unit 3 when an inhibitor switch 2 was placed in a park or neutral position while electrical power was supplied to the ignition. When this control unit 3 detected a break in the line, the control unit 3 outputted to the control circuit 6 an order to turn OFF the switch 7 downstream. The power supply to the starter motor 9 was terminated by turning OFF this switch 7 downstream.

However, improvements in operations in addition to the basic performance and safety features are required in vehicles such as automobiles. One example of improved operations is a smart ignition function.

The smart ignition function is a function that enables an engine to be started without a driver using a mechanical key. A driver has a key, but this key communicates wirelessly with a device mounted on a vehicle. Information such as ID and the like are transmitted and verified between this key and the vehicle mounted device to confirm if the key is an appropriate one or not. A driver holding an appropriate key starts the engine by operating operational parts such as a switch and the like installed inside the vehicle.

This smart ignition executes switching of electrical flows between a battery and various electrical loads, previously executed by a driver rotating a mechanical key, using electronic elements (push buttons) such as relays, semiconductor switches and the like. That is, a battery is connected and disconnected from accessory (ACC) loads, ignition loads and a starter motor using electronic operations. Therefore, electronic reliability needs to be secured at two locations, and the number of parts needed to detect faults at these two locations increases, causing a problem.

### SUMMARY OF THE INVENTION

It would be desirable to provide an engine start control device and a control method that can secure electronic reliability by detecting abnormalities in multiple starter circuit elements without increasing the number of parts used to detect faults or other abnormalities.

In the present invention, therefore, an engine start control device is provided that includes a control switch; two starter switching elements which are serially connected in a power supply circuit for a starter motor; a first controller that sequentially turns the switching elements ON and OFF in response to the control switch; a voltage detector that detects the voltage at a connection point between the switching elements; and a second controller that detects abnormalities in the two starter switching elements based on the voltage detected at the connection point.

The present invention is organized in such a manner that the presence or absence of a fault can be decided by a voltage level at the connection point when two switching elements are turned ON and OFF to detect a fault in two electronic components (the first and second starter switching elements). Therefore, parts designed to detect faults do not need to be installed in each of the two electronic components, and a fault can be detected without increasing the number of parts.

According to a first aspect of the invention, the engine start control device for controlling the supply of power to the starter motor of an engine includes a control switch that controls a power supply circuit to the starter motor, a first starter switching element and a second starter switching element, each having an ON state and an OFF state, which are serially connected together in the power supply circuit, a first control means having an output that sequentially turns on and off the first and second starter switching elements in response to the control switch, and electrical detection means for providing an output indicative of an electrical measurement which depends upon switch status of the first starter switching element and the second starter switching element. The engine start control device further includes a second control means having an input responsive to the output of the electrical detection means and having an output providing an indication of the existence of abnormalities in the first starter switching element and the second starter switching element based on said output of the electrical detection means.

The electrical detection means preferably includes a voltage detection means having an input coupled to a connection point between the first starter switching element the second starter switching element, wherein the voltage detection means has an output indicative of the voltage at the connection point, the input of the second control means is responsive to the output of the voltage detection means and the output of the second control means provides an indication of the existence of abnormalities in the first starter switching element and the second starter switching element based on the voltage at the connection point.

According to a second aspect of the invention, therefore, there is provided an engine start control device comprising a control switch that controls a power supply circuit to the starter motor of an engine, a first starter switching element and a second starter switching element, each having an ON state and an OFF state, which are serially connected in the power supply circuit; a first controller having an output that sequentially turns on and off the first and second starter switching elements in response to the control switch; a voltage detector having an input coupled to a connection point between the first starter switching element and the second starter switching element, and an output indicative of the voltage at the connection point; and a second controller having an input responsive to the output of the voltage detector and having an output indicating the existence of abnormalities in the first starter switching element and the second starter switching element based on the voltage at the connection point.

In a further preferred embodiment, the second control means turns on the first starter switching element in a state in which the second starter switching element is turned off when starting the engine, and the second control means detects abnormalities of the first starter switching element and the second starter switching element based on the voltage at the connection point detected by the voltage detection means when the second starter switching element is subsequently turned on.

The second control means may be arranged to turn off the first starter switching element in a state in which the second starter switching element is turned on when stopping the engine, and detects abnormalities of the first starter switching element and the second starter switching element based on the voltage at the connection point as detected by the voltage detection means when the second starter switching element is subsequently turned off.

In a preferred embodiment, the voltage detection means has a first resistor connected to the power supply circuit in parallel with the first starter switching element and a second resistor connected to the power supply circuit in parallel with the second starter switching element.

The engine start control device may further comprise an engine condition detection means that generates an output signal indicative of an engine state, wherein the first control means comprises a plurality of processors, at least one of the processors setting at least one of the starter switching elements in response to the engine state.

In one embodiment, the control switch is operable to generate a command signal and wherein the first control means is responsive to the command signal to set the first starter switching element into and out of a selected first switch state and to set the second starter switching element into and out of a selected second switch state, in a sequence.

The second control means may be arranged to generate an output in the form of an abnormality signal if the voltage level detected by the voltage detection means is not at a level indicative of the first starter switching element being in the selected first switch state and the second starter switching element being in the selected second switch state in accordance with the sequence in which the first control means sets the first and second starter switching elements.

Preferably, the second control means includes at least one processor, and wherein the processor is operable to set at least one of the starter switching elements in response to the abnormality signal.

More preferably still, the control switch is a pushbutton.

According to a third aspect of the invention, there is provided an apparatus for controlling the supply of power to the starter motor of an engine, the apparatus comprising a power supply circuit adapted for coupling to a starter motor; a first switch and a second switch serially connected in the power supply circuit to enable and disable the supply of power to the starter motor, and defining therebetween a connection point having a voltage level that varies as a function of the states of the first and second switches; a controller having an output that sets the first switch into to a selected first switch state and sets the second switch into to a selected second switch state; an abnormality detector having a voltage monitoring circuit coupled to the connection point to detect the voltage level thereat, and generating an abnormality signal if the detected voltage level is not a level indicative of the first switch being in the selected first switch state and the second switch being in the selected second switch state.

According to a fourth aspect of the invention, there is provided a method for controlling an engine starter motor in a vehicle of the type having a power supply circuit for supplying power to the starter motor and at least two starter switching elements serially connected in the power supply circuit. The method comprises the steps of detecting the value of at least one condition in the vehicle, setting the first starter switching element to a selected first switch state and setting the second starter switching element to a selected second switch state, wherein at least one of the starter switching elements is set in response to the detected condition. The method includes detecting an electrical property of the power supply circuit which is indicative of the status of the first and second starter switching elements, and generating a fault signal if the detected electrical property does not correspond to the first starter switching element being in the selected first switch state and the second starter switching element being in the second switch state.

In a preferred embodiment, the method includes the steps of detecting a voltage level at a connection point defined between the first and second starter switching element; and generating a fault signal if the voltage level detected at the connection point is not the voltage level corresponding to the first starter switching element being in the selected first switch state and the second starter switching element being in the selected second switch state.

According to a fifth aspect of the invention, therefore, there is provided a method for controlling an engine starter motor in a vehicle of the type having a circuit for supplying power to the starter motor and at least two starter switching elements serially connected in the circuit and defining therebetween a connection point. The method comprises the steps of detecting the value of at least one condition in the vehicle; setting the first starter switching element to a selected first switch state and setting the second starter switching element to a selected second switch state, wherein at least one of the starter switching elements is set in response to the detected condition; detecting the voltage level at the connection point; and generating a fault signal if the voltage level detected at the connection point is not the voltage level corresponding to the first starter switch element being in the selected first switch state and the second starter switching element being in the second switch state.

In a further preferred embodiment, the detected condition is the activation of a signal generated by a driver-operated switch.

Alternatively, the detected condition is a condition of the vehicle's engine.

The method may further comprise the step of setting at least one of the first and second starter switching elements in response to the fault signal.

Although not recited specifically, it will be appreciated that preferred and/or optional features of the first aspect of the invention are applicable to the second, third, fourth and fifth aspects of the invention also, alone or in appropriate combination.

### BRIEF DESCRIPTION OF THE DRAWINGS

FIG. 1 is a block diagram of an engine start control device showing one embodiment of the present invention.
FIG. 2 is state table, showing the states of switching elements in a load switching module for power supply position transition states in accordance with the embodiment of FIG. 1.
FIG. 3 is a circuit diagram of a load switching module shown in FIG. 1.
FIG. 4 is a circuit diagram of a voltage monitoring circuit used in the embodiment of FIG. 1.
FIG. 5 is a first flow chart showing operation of the engine start control device shown in FIG. 1.
FIG. 6 is a second flow chart showing operation of the engine start control device shown in FIG. 1.
FIG. 7 is a third flow chart showing operation of the engine start control device shown in FIG. 1.
FIG. 8 is a fourth flow chart showing operation of the engine start control device shown in FIG. 1.
FIG. 9 is a circuit diagram of a conventional starter.

### DETAILED DESCRIPTION OF THE PREFERRED EMBODIMENTS

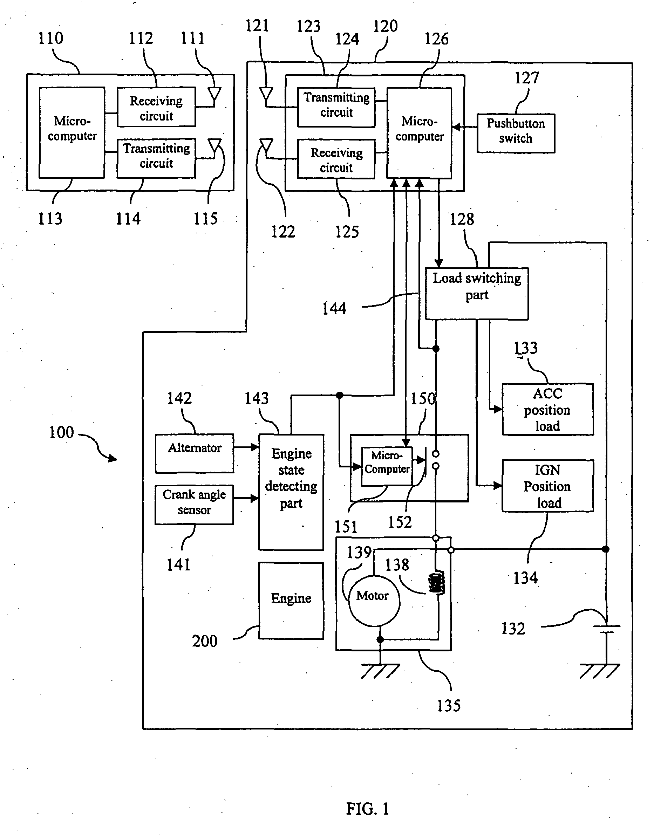

An embodiment of the present invention will be now explained with reference to FIGS. 1 to 8.

FIG. 1 is a block diagram showing an embodiment of the engine start control device of the present invention, and this device contains the smart ignition functions described above. As shown in the same figure, an engine start control device 100 of this embodiment has a portable device 110 and a vehicle-mounted device 120.

The portable device 110 is a small device that is kept by a driver such as the automobile owner and has a key function which can operate an automobile. In the portable device 110, the information (ID information) for identifying the portable device is embedded and is transmitted to vehicle-mounted device 120 by wireless communication with the vehicle-mounted device 120. The transmitted ID information is validated by the vehicle-mounted device 120, and whether or not the portable device 110 is a valid key for the automobile, that is, whether or not the owner of the portable device 110 is an approved user of the automobile, is determined.

The vehicle-mounted device 120 acquires the ID information stored in the portable device 110 by communication with the portable device 110 and determines whether or not the driver is an approved driver. Also, starting of the engine is controlled based on the command from the driver via a switch (pushbutton switch 127), which will be described later, installed in the driver's seat in the automobile.

Next, the detailed constitution of the portable device 110 and the vehicle-mounted device 120 will be explained.

The portable device 110 has a receiving antenna 111, a receiving circuit 112, a microcomputer 113, a transmitting circuit 114, and a transmitting antenna 115.

The receiving antenna 111 receives a signal, such as an ID request, transmitted from the vehicle-mounted device 120.

The receiving circuit 112 demodulates and decodes the signal received by the receiving antenna 111 and outputs the resulting signal to the microcomputer 113.

The microcomputer 113 carries out a prescribed processing for the signal input from the receiving circuit 112, generates reply data if necessary, and outputs it to transmitting circuit 114. For example, when an ID request signal is transmitted from the vehicle-mounted device 120 and input to the microcomputer 113 via the receiving antenna 111 and the receiving circuit 112, the ID information of the portable device 110 itself, stored in advance, is read out and output by the microcomputer 113 to the transmitting circuit 114 as a reply to the vehicle-mounted device 120. At that time, the microcomputer 113 carries out encoding, etc., if necessary.

Also, the ID information is preset in a memory, not shown in the figure, for instance, in the microcomputer 113.

Also, if the signal such as an ID request signal transmitted from the vehicle-mounted device 120 is an encoded signal, the microcomputer 113 first decodes it and carries out prescribed processing corresponding to the signal.

Also, the transmitting circuit 114 converts the reply data such as ID information being input from the microcomputer 113 into a transmittable signal by transmission line encoding, modulation, etc., and outputs it to the transmitting antenna 115 to be transmitted to the vehicle-mounted device 120.

The transmitting antenna 115 transmits the signal being input from the transmitting circuit 114 to the vehicle-mounted device 120.

The vehicle-mounted device 120 has a transmitting antenna 121, a receiving antenna 122, a power supply position controller 123, a pushbutton switch 127, a load switching module 128, a battery 132, an ACC position load 133, IGN position load 134, and a starter 135.

Also, the power supply position controller 123 has a transmitting circuit 124, a receiving circuit 125, and a processor in the form of microcomputer 126, and starter 135 has a coil 138 and a motor 139. Also, the engine whose start is controlled by the engine start control device 100 is shown as an engine 200 in FIG. 1.

The transmitting antenna 121 transmits a signal, such as an ID request signal sent from transmitting circuit 124 of the power supply position controller 123, to the portable device 110.

The receiving antenna 122 receives a signal containing ID information transmitted from the portable device 110 and outputs it to the receiving circuit 125 of the power supply position controller 123.

The power supply position controller 123 controls the load switching module 128 based on the operation of the pushbutton switch 127 of a driver, the previous power supply position, the state of the engine 200 detected by an engine state detecting part 143, etc.

Also, the power supply position controller 123 obtains the ID information from the portable device 110 through communication with the portable device 110 and detects whether or not the portable device 110 is a valid portable device corresponding to the vehicle-mounted device 120, that is, whether or not the driver having it is an approved driver.

The transmitting circuit 124 converts the ID request signal input from the microcomputer 126 into a transmittable signal by prescribed transmission line encoding, modulation, etc., and outputs it to the transmitting antenna 121 to be transmitted to the portable device 110.

The receiving circuit 125 outputs to the microcomputer 126 the signal generated by demodulating, decoding, etc., the reply signal containing the ID information from the portable device 110 received by the receiving antenna 122.

The microcomputer 126 controls the load switching module 128 based on the operation of the pushbutton switch 127, the previous power supply position, and the state of the engine 200 detected by the engine state detecting part 143, and changes the power supply position. If necessary, the ID information is also acquired from the portable device 110 at that time.

The power supply position is a load connection state with the battery 132.

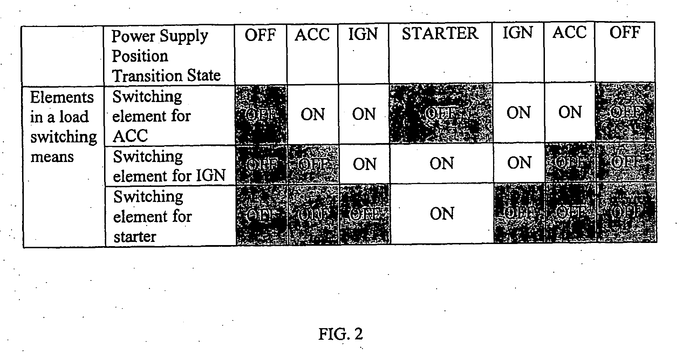

FIG. 2 shows the type of power supply position, the load connection state (On/Off switching state of an internal element of the load switching module 128) for each position, and the transition state of the position.

As shown in FIG. 2, the power supply position can be one of the four positions comprising an OFF position in which no load is connected to the battery 132, an ACC position in which accessories (ACC) are connected to the battery 132, an IGN position in which the accessories (ACC) and an ignition system (IGN) are connected to battery 132, and a starter position at which the ignition system (IGN) and the starter 135 are connected to the battery 132.

In principle, beginning from the OFF position at which the automobile is not used at all, the position changes each time the pushbutton switch 127 is pressed, first to the ACC position, then to the IGN position, the starter position, the IGN position, the ACC position, and the OFF position.

When changing from the OFF position to the ACC position, in order to detect whether or not the automobile is to be used by an approved driver, the ID information of the portable device 110 is acquired, and whether or not the ID corresponds to the vehicle-mounted device 120 is confirmed.

Also, the transition from the starter position to the IGN position is carried out based on the operating state of the engine 200, without dependence on operation of the pushbutton switch 127.

More specifically, first, if the driver presses the pushbutton switch 127 with the engine 200 stopped and the accessories not powered at all (OFF position state), the microcomputer 126 outputs an ID request signal to the portable device 110 to detect whether or not the driver is an approved driver, that is, whether or not the portable device 110 held by the driver corresponds to the vehicle-mounted device 120. Specifically, if necessary, the ID request signal is generated by an encoding process, etc. and is outputted to the transmitting circuit 124.

If the ID information is sent back from the portable device 110 in accordance with the output ID request signal, the microcomputer 126 receives it via the receiving antenna 122 and the receiving circuit 125 in the power supply position controller 123, if necessary carries out a decoding process, etc., and acquires the ID information of the portable device 110. Then, the ID information acquired is compared to the ID information stored in advance, and whether or not the driver is an approved driver, that is, whether or not portable device 110 is a valid portable device corresponding to the vehicle-mounted device 120, is determined.

If the result of the ID information validation determines that the driver is not an approved driver, the microcomputer 126 does not carry out the processing related to control of the power supply position and maintains the power supply position in the OFF position. In other words, a state is maintained in which the driver cannot drive the automobile, start the engine, or use the accessories.

In this state, each time the pushbutton switch 127 is operated, the processing for detecting whether or not the above-mentioned driver is approved, that is, the processing for generating the ID request signal and sending it to the portable device 110, is carried out.

If the result of the ID information validation determines that the driver is an approved driver, the microcomputer 126 outputs a switching signal to the load switching module 128 to change the power supply position from the OFF position to the ACC position.

If the pushbutton switch 127 is pressed after the power supply position has changed from the OFF position to the ACC position, the microcomputer 126 outputs a switching signal to the load switching module 128 to change the power supply position from the ACC position to the IGN position. Based on this signal, the load switching module 128 switches the electrification state, so that the IGN position load 134 is electrified, and a preparation state for starting the engine is established.

If the pushbutton switch 127 is pressed again when the power supply position has been changed from the ACC position to the IGN position, the microcomputer 126 outputs a switching signal to the load switching module 128 to change the power supply position from the IGN position to the starter position. The battery 132 and the starter 135 are then connected in the load switching module 128, so that starting of engine 200 is initiated.

The transition from the starter position to the IGN position depends on the operation of the pushbutton switch 127, but is carried out based on the signal showing the state of the engine 200 input from the engine state detecting circuit 143, which will be described later. If the engine 200 is started normally, a signal showing that a cranking state (a low-speed rotation state immediately after the engine starts rotating) of the engine 200 and a signal showing normal rotation of the engine 200 are sequentially input from the engine state detecting part 143, although the details of this will be described later. If the signal showing normal rotation of the engine 200 is input from the engine state detecting part 143, the microcomputer 126 outputs a switching signal to the load switching module 128 to change the power supply position from the starter position to the IGN position. Thus, the connection between the battery 132 and starter 135 is cut off.

If the pushbutton switch 127 is pressed when the engine 200 has started and the power supply position is the IGN position, the microcomputer 126 outputs a switching signal to the load switching module 128 to change the power supply position from the IGN position to the ACC position. Based on this signal, the load signal switching part 128 switches the electrification state so that electrification of the IGN position load 134 is terminated, thereby stopping rotation of the engine 200.

Then, if the pushbutton switch 127 is pressed again after the power supply position has been changed from the IGN position to the ACC position, the microcomputer 126 outputs a switching signal to the load switching module 128 to change the power supply position from the ACC position to the OFF position. Based on this signal, the load switching module 128 switches the electrification state such that a power supply to all of the constitutional parts is substantially stopped, thereby ending the use of the automobile.

If engine 200 is started normally, the microcomputer 126 switches the power supply position in this manner.

The pushbutton switch 127 is a pushbutton operated switch when the driver of the automobile commands electrification of the accessories, starting and stopping the engine, etc. A command signal indicating that the pushbutton switch 127 has been pressed is output to the microcomputer 126 of the power supply position controller 123. The driver can carry out an operation similar to the conventional one simply by pressing the pushbutton switch 127 instead of rotating the ignition switch by using a key as in the conventional operation.

The load switching module 128 is a switching means that switches the load that is connected to the battery 132 according to the control by the microcomputer 126 of power supply position controller 123.

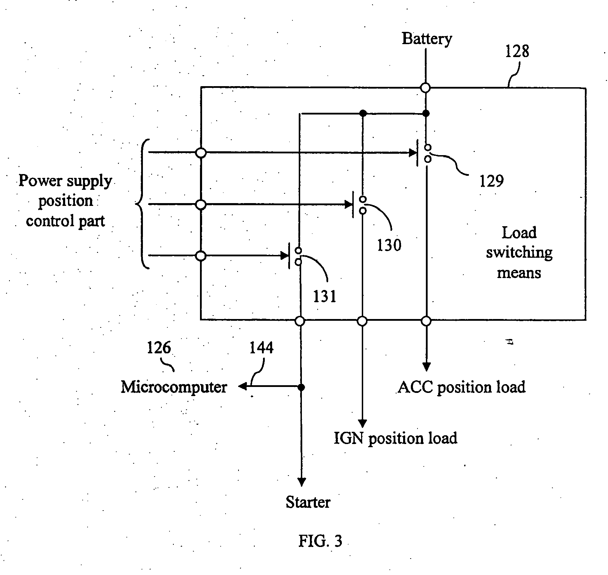

The internal constitution of the load switching module 128 is shown in FIG. 3.

As shown in FIG. 3, load switching module 128 has switches in the form of a switching element 129 for ACC, a switching element 130 for IGN, and a first starter switching element 131.

The switching element 129 for ACC is a switch for switching On (electrification state)/Off (unpowered state) the connection of the battery 132 to the ACC position load 133, the switching element 130 for IGN is a switch for switching On/Off the connection of the battery 132 to the IGN position load 134, and the first starter switching element 131 is a switch for switching On/Off the connection of the battery 132 to the starter 135.

A control signal for switching On/Off each switching element is input to the load switching module 128 with this constitution from the microcomputer 126 of the power supply position controller 123, and the On/Off-state of each switching element 129-131 of the load switching module 128 is sequentially switched based on the control signal. As a result, the power supply position sequentially moves through the states shown in FIG. 2.

The battery 132 is a battery for supplying power to the ACC position load 133, the IGN position load 134, and starter 135.

The ACC position load 133 is a power supply load of so-called accessories (electrical products provided in the vehicle) and is a load to which the power is supplied from the battery 132 when the power supply position is in the ACC position and in the IGN position, as shown in FIG. 2.

The IGN position load 134 is a power supply load of a so-called ignition system, and as shown in FIG. 2, it is a load to which power is supplied from the battery 132 when the power supply position is at the IGN position and the starter position.

The starter 135 is a device that starts the engine by using the battery 132 as a power source.

The starter 135 has a coil 138 and a motor 139, as shown in FIG. 1. Also, the starter 135 has a pinion, pinion gear, ring gear, overrunning clutch, etc., which are not shown in the figure, as mechanisms for mechanically connecting motor 139 and the engine 200.

If the first starter switching element 131 is in an On-state in the load switching module 128 and the battery 132 is connected to the starter 135, current from battery the 132 is supplied to the coil 138 so that the battery 132 and the motor 139 are directly connected. A large current is then supplied to the motor 139 from the battery 132, and the motor 139 starts rotating.

Also, for example, the pinion, which is not shown in the figure, is pushed out in the direction of the engine 200 by a magnetic force generated by the current sent to the coil 138, and the pinion gear meshes with the ring gear installed on the periphery of the flywheel so that the motor 139 and the engine 200 are mechanically connected. Rotation of the motor 139 is thus transmitted to the engine 200, and the engine 200 is started.

Also, if the engine 200 has started and rotation of the motor 139 is too fast, the overrunning clutch, which is not shown in the figure, is activated to prevent the excessively fast rotation of the motor 139.

A crank angle sensor 141 is a sensor for detecting the rotational angle of a crankshaft, which is not shown in the figure. A signal showing the crankshaft angle detected by the crank angle sensor 141 is input to an engine control unit, which is not shown in the figure, and is used to control the ignition timing for the engine 200.

Also, the signal showing the crank angle detected by the crank angle sensor 141 is input into the engine state detecting part 143 as a signal for determining whether the engine 200 has entered a cranking state. Immediately after the engine 200 has started to rotate normally, since the engine 200 has entered a cranking state and the crank angle sensor 141 outputs a low-frequency pulse signal, the cranking state of the engine 200 can be detected from the signal.

An alternator 142 is a power generator driven by the rotation of the engine 200. The power generated by the alternator 142 is rectified by a rectifying element such as a diode and used to charge the battery 132.

Also, the output voltage of the alternator 142 is input to the engine state detecting part 143 as a signal showing the rotational state of the engine 200. If the engine 200 has started normally, the alternator 142 is also rotated, and a voltage of certain level or higher is output. Therefore, monitoring the output voltage of the alternator 142 enables a determination of whether or not the engine 200 is rotating appropriately at a fixed rotational speed or higher.

The engine state detecting part 143 detects the state of the engine 200 based on the output of the crank angle sensor 141 and the generator 142 and outputs the signal showing the detected state of the engine 200 to the microcomputer 126.

The engine state detecting part 143 detects whether or not the engine 200 is in a cranking state based on the crank angle detecting signal input from the crank angle sensor 141, and if the cranking state is detected, a signal showing the state is output to the microcomputer 126 of the power supply position controller 123. If the output signal from the crank angle sensor 141 is a signal with a low-frequency pulse shape, the engine state detection part 143 determines that engine 200 is in a cranking state.

Also, the engine state detecting part 143 detects whether or not the engine 200 is in a normal rotating state based on the voltage value of the power generated in the alternator 142 that is output from the alternator 142, and if it is determined that the engine 200 is rotating normally, a signal showing this state is output to the microcomputer 126 of the power supply position controller 123. If the voltage value of the output voltage from the alternator 142 is at a prescribed threshold or above it, the engine state detection part 143 determines that engine the 200 is in a normal rotating state.

Therefore, if there are no problems in the starter 135 and the engine 200, the engine state detecting part 143 generates a signal for sequentially changing the state from the engine stopped state to a cranking state and an engine rotation state, and outputs it to the microcomputer 126 of the power supply position controller 123.

On the other hand, if there is a problem in the starter 135, a signal showing an engine stopped state is always output to the microcomputer 126 of the power supply position controller 123.

Revisiting FIG. 1, a starter control module 150 for turning on/off the power supply from the battery 132 to the starter 135 is installed between the load switching module 128 and the starter 135.

The starter control module 150 has a processor in the form of a microcomputer 151 and a switch in the form of a second starter switching element 152.

The microcomputer 151 controls On/Off of the second starter switching element 152 based on the control signal from the microcomputer 126 of the power supply position controller 123 and the signal showing the state of the engine 200 from the engine state detecting part 143.

The second starter switching element 152 is a switching element for controlling On/Off of a power supply line to the starter 135 from the load switching module 128.

In FIG. 3, as mentioned above, the switching element 131 for the first starter for controlling the electrification of the starter 135 by the battery 132 has already been installed in the load switching module 128. Therefore, the first starter switching element 131 in the load switching module 128 and the second starter switching element 152 of the starter control module 150 are arranged in series with the power supply line connecting battery 132 and the starter 135. For this reason, power is supplied from the battery 132 to the starter 135 only when both of them are in an On-state.

The processing in the microcomputer 151 of the starter control module 150 will now be explained in further detail.

First, when the power supply position is in the IGN position and the pushbutton switch 127 is pressed again to change to the starter position, a control signal commanding switching of the second starter switching element 152 to an On-state is input to the microcomputer 151 from the microcomputer 126 of the power supply position controller 123. Microcomputer 151 switches the second starter switching element 152 to an On-state according to the control signal. Also, although the second starter switching element 152 is switched to an On-state, if the first starter switching element 131 of the load switching module 128 is still in an Off-state, there is no change from the IGN position.

The first starter switching element 131 of the load switching module 128 is then also put in an On-state and set to the starter position, and electrification of the starter 135 is begun.

After the engine 200 starts due to the transition to a starter position, the microcomputer 151 of the starter control module 150 independently controls the second starter switching element 152 based on the signal showing the state of engine 200 input from the engine state detecting part 143. In other words, the element can be switched to an Off-state.

If the engine 200 starts normally, a signal showing cranking of the engine 200 and a signal showing normal rotation of the engine 200 are sequentially input to the microcomputer 151 from the engine state detecting part 143. After the signal showing normal rotation of the engine 200 is input from the engine state detecting part 143, the microcomputer 151 switches the second starter switching element 152 to an Off-state after a prescribed time has elapsed.

This prescribed time is a sufficient time for the same signal from the engine state detecting part 143 to be input to the microcomputer 126 of the power supply position controller 123, for the microcomputer 126 to output a signal for the switching load switching module 128 to change the power supply position from the starter position to the IGN position, and for the first starter switching element 131 of the load switching module 128 to be actually switched to an Off-state. In other words, the microcomputer 151 waits for a prescribed time so that the second starter switching element 152 can be cut off after the first starter switching element 131 of the load switching module 128 with which it is arranged in series is cut off, and the second starter switching element 152 is then switched to an off-state.

In particular, an electrical detection means in the form of a voltage monitoring circuit 144 for detecting the voltage at the connection point between the first starter switching element 131described above and the second starter switching element 152 is installed in the engine start control device of this embodiment, and the voltage at the connection point detected by the voltage monitoring circuit 144 is input to the microcomputer 126 of the power supply position controller 123. In the microcomputer 126, when the engine is started and the engine is stopped, the potential at the connection point of the combination of the first starter switching element 131 and the second starter switching element 152 is detected by the voltage monitoring circuit 144, and the presence of a disconnection abnormality for the first starter switching element 131 and the second starter switching element 152 is checked using the result.

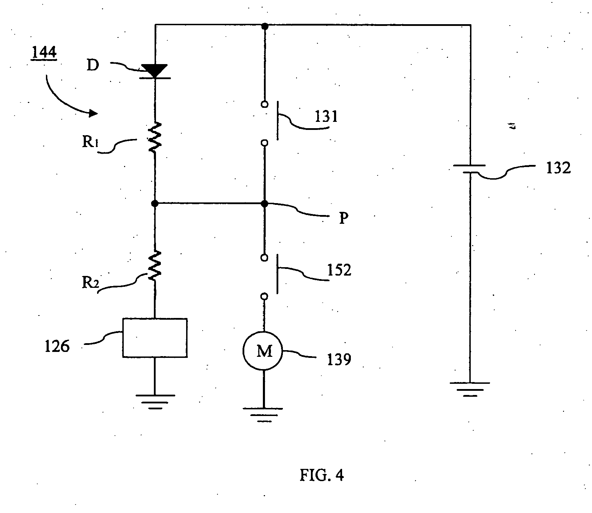

The main parts of the abnormality detecting circuit are shown in FIG. 4. The first starter switching element 131 and the second starter switching element 152 are connected in series between the battery 132 and the starter motor 139, and the voltage monitoring circuit 144, which comprises two resistors R1 and R2 with known resistances (very large resistance values) and a diode D, is connected between them and to the microcomputer 126. The microcomputer 126 detects the potential of the connection point P of the first starter switching element 131 and the second starter switching element 152 by means of the voltage monitoring circuit 144. For example, if the first starter switching element 131 is in an Off-state, the second starter switching element 152 is in an On-state and there is no abnormality such as disconnection in either of the switching elements 131 and 152, the corresponding potential of the connection point P detected by the voltage monitoring circuit 144 and the microcomputer 126 is a value wherein the voltage drop across resistor R1 is subtracted from the potential of the battery 132. Conversely, if in this situation there is an abnormality such as disconnection in the first starter switching element 131, the potential detected by the voltage monitoring circuit 144 and the microcomputer 126 will be a value in which the voltage drop portion across the resistors R1 + R2 is subtracted from the potential of the battery 132. Therefore, an abnormality such as disconnection of the first starter switching element 131 can be tested.

Also, if the first starter switching element 131 is in an On-state, the second starter switching element 152 is in an On-state, and there is no abnormality such as disconnection in both two switching elements 131 and 152, the potential detected by the voltage monitoring circuit 144 and the microcomputer 126 is a value in which the voltage drop across the first starter switching element 131, the second starter switching element 152, and the starter motor 139 is subtracted from the potential of the battery 132. Conversely, if in this situation there is an abnormality such as disconnection in the second starter switching element 152, the potential detected by the voltage monitoring circuit 144 and the microcomputer 126 is a value in which only the voltage drop across the resistor R1 is subtracted from the potential of the battery 132. Therefore, an abnormality such as disconnection of the second starter switching element 152 can be tested.

Also, the first control means in this embodiment of the present invention corresponds to the microcomputer 126, and the second control means in this embodiment corresponds to the microcomputer 126 and the voltage monitoring circuit 144. In this example, one microcomputer 126 is used both as the first control means and the second control means, but two separate microcomputers may also be used.

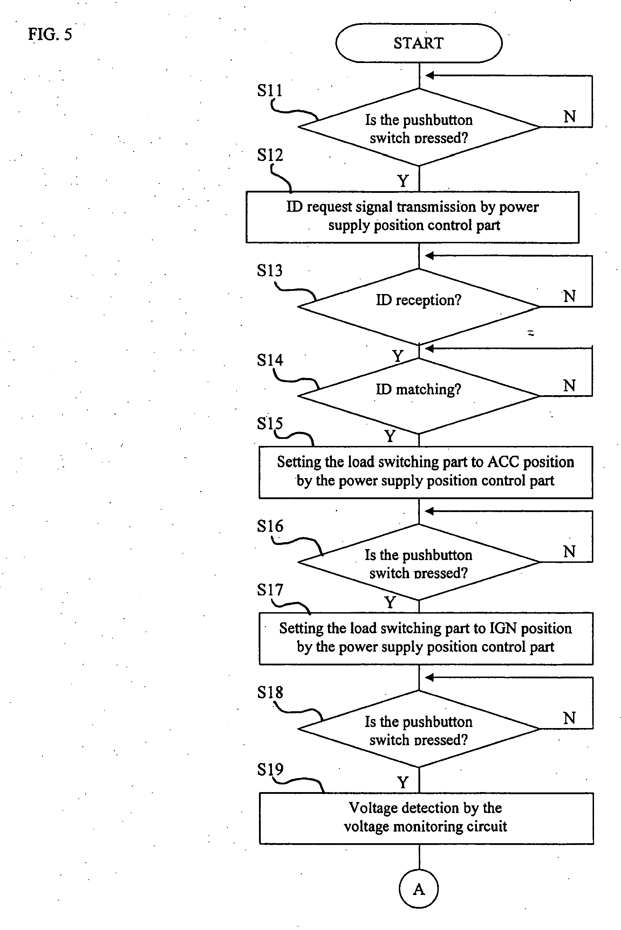

Next, the operation of an engine start control device 100 having this constitution will be explained with references to Figures 5-7. Figures 5-7 are flow charts showing the processing flows of the engine start control device 100.

First, a driver that is a user enters a vehicle equipped with the vehicle-mounted device 120 while carrying the portable device 110 and presses the pushbutton switch 127. As a result, a corresponding signal is input to the microcomputer 126 of the power supply position controller 123 from the pushbutton switch 127, and the microcomputer 126 detects it (step S11).

The microcomputer 126 requests an ID information from the portable device 110 to confirm that the portable device 110 carried by the driver is the portable device registered for the automobile. In other words, the microcomputer 126 transmits a request signal for the ID information to the portable device 110 via the transmitting circuit 124 and the transmitting antenna 121 (step S12).

The transmitted request signal for the ID information is received by the receiving antenna 111 of the portable device 110 and input to the microcomputer 113 via the receiving circuit 112. In response to the ID request signal, the microcomputer 113 of the portable device 110 transmits the ID information of the portable device 110 to the vehicle-mounted device 120 via the transmitting circuit 114 and the transmitting antenna 115.

The microcomputer 126 of the vehicle-mounted device 120 waits for reply data containing the ID information to be received from the portable device 110, receives the transmitted signal containing the ID information by means of the receiving antenna 122, and inputs it into the microcomputer 126 via the receiving circuit 125 of the power supply position controller 123 (step S13).

The microcomputer 126 identifies the input ID and checks whether or not it matches the ID registered in advance for the vehicle (step S14).

If the input ID and the registered ID match (step S14), the power supply position controller 123 outputs a control signal to the load switching module 128 so that the battery 132 and the ACC position load 133 will be connected, that is, so the power supply position will be the ACC position. As a result, power from the battery 132 is supplied to the ACC position load 133 (step S15).

If the pushbutton switch 127 is pressed again (step S16), the microcomputer 126 of the power supply position controller 123 outputs a control signal to the load switching module 128 so that the battery 132, the ACC position load 133, and the IGN position load 134 will be connected, that is, the power supply position will be the IGN position. As a result, in the load switching module 128 the power supply position is switched to the IGN position, and power from the battery 132 is supplied to the ACC position load 133 and to the IGN position load 134 (step S17).

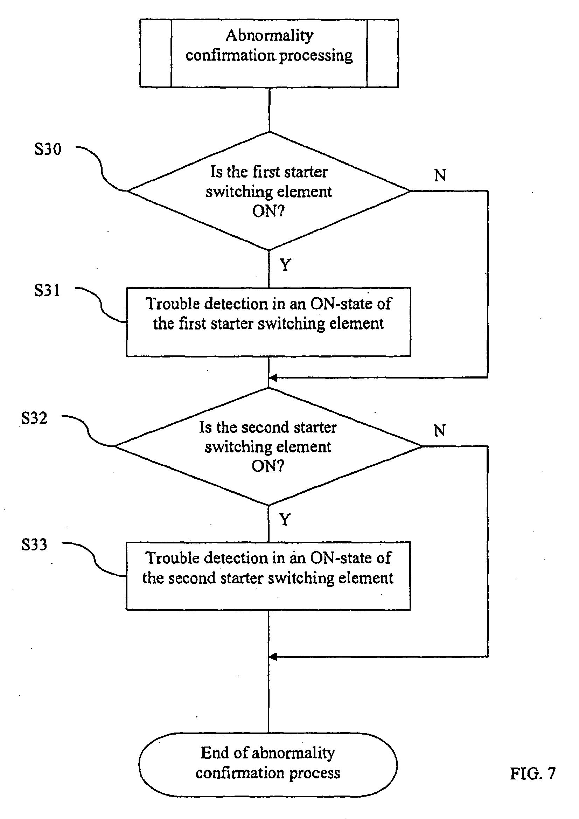

When the power supply position is in an IGN position, both the first starter switching element 131 and the second starter switching element 152 should be Off, but the potential at that time is detected by the voltage monitoring circuit 144 and the microcomputer 126 (step S19). At step 20, if it is confirmed that the potential detected at step S19 is one at which both the first starter switching element 131 and the second starter switching element 152 are Off, the power supply potential control part 123 outputs a signal to the microcomputer 151 of the starter control module 150 requesting an On-state of the second starter switching element 152 (step S21). Conversely, if the potential detected at step 19 is one at which both the first starter switching element 131 and the second starter switching element 152 are not Off, an abnormality confirmation process shown in FIG. 7 is implemented at step 20.

At step 21, if the microcomputer 151 of the starter control module 150 sets the second starter switching element 152 to an On-state in response to the request from the microcomputer 126, the potential at that time is detected by the voltage monitoring circuit 144 and the microcomputer 126 (step S22).

At step 23, if it is confirmed that the potential detected at step 22 is one at which the first starter switching element 131 is Off and the second starter switching element 152 is On, the power supply position controller 123 outputs a signal requesting an On-state for the first starter switching element 131 to the load switching module 128 (step S24). Conversely, at step 23, if the potential detected at step 22 is not one at which the first starter switching element 131 is Off and the second starter switching element 152 is On, the power supply position controller 123 outputs a signal for turning Off second starter switching element 152 to the microcomputer 151 of the starter control module 150 and implements the abnormality confirmation processing shown in FIG. 7.

At step 24, if the microcomputer 126 sets the first starter switching element 131 to an On-state, the potential at that time is detected by the voltage monitoring circuit 144 and the microcomputer 126 (step S25).

At step 26, if it is confirmed that the potential detected at step 25 is one at which both the first starter switching element 131 and the second starter switching element 152 are On, the flow proceeds to the next operation to move to a cranking state. Conversely, at step 26, if the potential detected at step 25 is one at which both the first starter switching element 131 and the second starter switching element 152 are not On, the power supply position controller 123 outputs a signal to the microcomputer 151 of the starter control module 150 to turn off the second starter switching element 152 (step S28). The power supply position controller 123 further outputs a signal to the load switching module 128 to turn off the first starter switching element 131 (step S29) and implements the abnormality confirmation processing shown in FIG. 7.

In this manner, the microcomputer 126 of the power supply position controller 123 connects the battery 132, the IGN position load 134, and the starter 135 to the load switching module 128 and outputs a control signal so that the connection of the battery 132 and the ACC position load 133 will be cut off. As a result, the supply of power from the battery 132 to the ACC position load 133 is terminated, and the power from the battery 132 is supplied to the IGN position load 134 and the starter 135. At that time, the power supply position is the starter position.

In the starter position, with the starter 135 connected to the battery 132, the current applied via the load switching module 128 energizes the coil 138, and the battery 132 and the motor 139 of the starter 135 are directly connected. As a result, a large current directly supplied to motor 139 from the battery 132 causes the motor 139 to begin to rotate.

Also, the introduction of current into the coil 138 causes the pinion, which is not shown in the figure, to be pushed out in the direction of the engine 200 allowing the pinion gear to mesh with the ring gear on the periphery of the flywheel thus mechanically connecting the motor 139 and the engine 200. The rotation of the motor 139 is thereby transmitted to the engine 200, and the engine 200 is started.

If the engine 200 starts appropriately and moves from a cranking state to an ordinary rotating state, the output voltage of the alternator 142 also increases. Then, if it exceeds a preset threshold, the engine state detecting part 143 determines that then engine 200 is rotating normally and outputs a signal indicating this state to the microcomputer 126.

If the signal showing normal rotation of the engine 200 is input, the microcomputer 126 of the power supply potential control part 123 outputs a control signal to the load switching module 128 so that the battery 132, the ACC position load 133, and the IGN position load 134 will be connected and the connection of the battery 132 to the starter 135 will be cut off, that is, so the power supply position will be the IGN position. As a result, the supply of power from the battery 132 to the starter 135 is terminated, and power from the battery 132 is supplied to the ACC position load 133 and the IGN position load 134.

In this manner, starting of the engine 200 is completed. When the power supply position moves from the IGN position to the starter position in this embodiment, since abnormalities in the first starter switching element 131 and the second starter switching element 152, as electronic switches, can be detected by the voltage monitoring circuit 144, the reliability or the electronic components can be secured without increasing the number of parts.

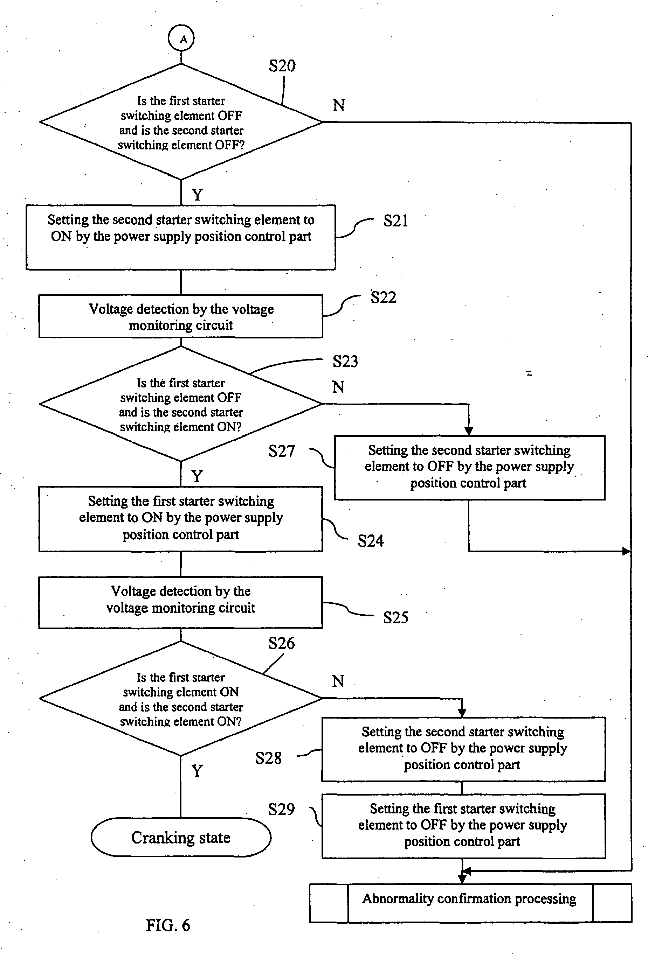

Also, if an abnormality is detected at steps S23 and S26 shown in FIG. 6, the flow proceeds to the abnormality conformation routine shown in FIG. 7, and, at step S30, whether or not the first starter switching element 131 is On is determined. If the switching element is On, the problem is detected in an On-state (step S31). Since the first starter switching element 131 should be Off at step S30, it is apparent that some abnormality has occurred.

Also, at step S32, whether or not the second starter switching element 152 is On is determined, and if the switching element is On, the problem is detected in an On-state (step S33). At step S32, since the second starter switching element 152 should be Off, it is apparent that some abnormality has occurred.

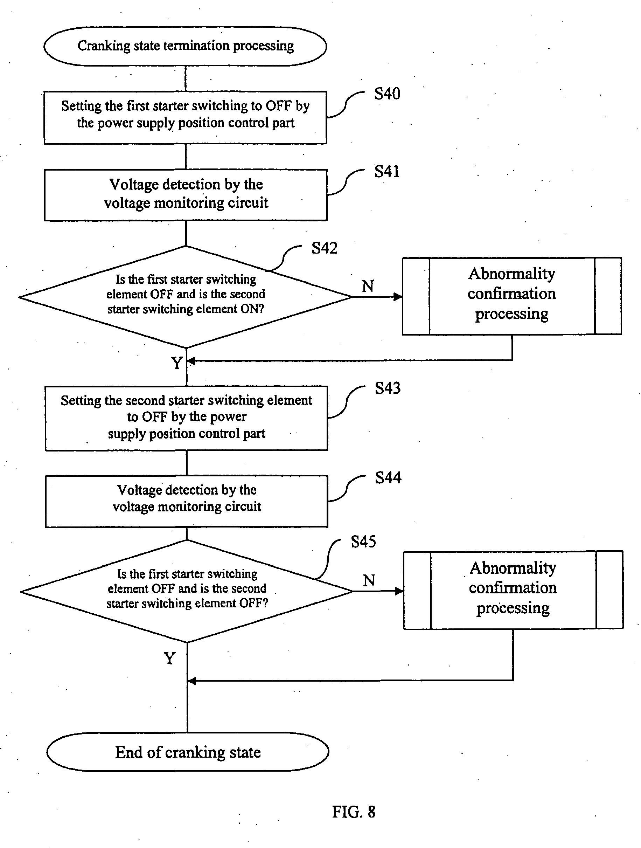

In addition, in this embodiment, abnormality detection is implemented again, even when the cranking state changes to an ordinary rotation state. This sequence is explained with reference to FIG. 8.

As mentioned above, in a state in which the power supply position is in the starter position, both the first starter switching element 131 and the second starter switching element 152 are On. First, at step 40, a signal is output to the load switching module 128 requesting an Off-state for the first starter switching element 131. Then, at step S41, the potential at that time is detected by the voltage monitoring circuit 144 and the microcomputer 126.

At step S42, if it is confirmed that the potential detected at step S41 is one at which the first starter switching element 131 is Off and the second starter switching element 152 is On, the power supply position controller 123 outputs a signal to the microcomputer 151 of the starter control module 150 requesting an Off-state for the second starter switching element 152 (step S43). Conversely, at step S42, if the potential detected at step S41 is not one at which the first starter switching element 131 is Off and second starter switching element 152 is On, the flow proceeds to step S43 after implementing the abnormality confirmation processing shown in FIG. 7. The abnormality confirmation processing shown in FIG. 7 has been described above.

At step S44, after the potential at that time is detected by the voltage monitoring circuit 144 and the microcomputer 126, if it is confirmed at step S45 that the potential detected at step S44 is one at which both the first starter switching element 131 and the second starter switching element 152 are Off, the cranking state is ended. Conversely, at step 45, if the potential detected at step 44 is one at which both the first starter switching element 131 and the second starter switching element 152 are not Off, the abnormality confirmation processing shown in FIG. 7 is implemented, and the cranking state is ended.

In this embodiment, in addition to the change of power supply position from the IGN position to the starter position, when the cranking state transitions to a normal rotation state, that is, when the starter position returns to the IGN position, since abnormalities of the first starter switching element 131 and the second starter switching element 152 are detected by one voltage monitoring circuit 144, the reliability of the electronic components can be further secured without increasing the number of parts.

This application is based on Japanese Patent Application No. 2004-253139, filed August 31, 2004 in the Japanese Patent Office, the entire contents of which are hereby incorporated by reference.

Also, the above-mentioned embodiment has been described in order to allow easy understanding of the present invention, and does not limit the present invention. Therefore, each element presented in the above-mentioned embodiment also incorporates all the design changes and equivalent articles belonging with the technical scope of the present invention.

## Claims

1. An engine start control device for controlling the supply of power to the starter motor (139) of an engine, the control device comprising:
a control switch (27) that controls a power supply circuit to the starter motor (139),
a first starter switching element (131) and a second starter switching element (152), each having an ON state and an OFF state, which are serially connected together in the power supply circuit,
a first control means (126) having an output that sequentially turns on and off the first and second starter switching elements (131, 152) in response to the control switch (27),
voltage detection means (144) having an input coupled to a connection point (P) between the first starter switching element (131) and the second starter switching element (152), wherein the voltage detection means (144) has an output indicative of the voltage at the connection point (P), and
second control means (126) having an input responsive to the output of the voltage detection means (144) and having an output providing an indication of the existence of abnormalities in the first starter switching element (131) and the second starter switching element (152) based on the voltage at the connection point (P).

2. The engine start control device as claimed in Claim 1, wherein the second control means (126) turns on the first starter switching element (131) in a state in which the second starter switching element (152) is turned off when starting the engine, and the second control means (126) detects abnormalities of the first starter switching element (131) and the second starter switching element (152) based on the voltage at the connection point (P) detected by the voltage detection means (144) when the second starter switching element (152) is subsequently turned on.

3. The engine start control device as claimed in Claim 1 or Claim 2, wherein the second control means (126) turns off the first starter switching element (131) in a state in which the second starter switching element (152) is turned on when stopping the engine, and detects abnormalities of the first starter switching element (131) and the second starter switching element (152) based on the voltage at the connection point (P) as detected by the voltage detection means (144) when the second starter switching element (152) is subsequently turned off.

4. The engine start control device as claimed in any one of Claims 1 to 3, wherein the voltage detection means (144) has a first resistor (R1) connected to the power supply circuit in parallel with the first starter switching element (131) and a second resistor (R2) connected to the power supply circuit in parallel with the second starter switching element (152).

5. The engine control device as claimed in any one of Claims 1 to 4, further comprising an engine condition detection means (143) that generates an output signal indicative of an engine state, wherein the first control means (126) comprises a plurality of processors, at least one of the processors setting at least one of the starter switching elements (131, 152) in response to the engine state.

6. The engine control device as claimed in any one of Claims 1 to 5, wherein the control switch (27) is operable to generate a command signal and wherein the first control means (126) is responsive to the command signal to set the first starter switching element (131) into and out of a selected first switch state and to set the second starter switching element (152) into and out of a selected second switch state, in a sequence.

7. The engine control device as claimed in Claim 6, wherein the second control means (126) generates an output in the form of an abnormality signal if the voltage level detected by the voltage detection means (144) is not at a level indicative of the first starter switching element (131) being in the selected first switch state and the second starter switching element (152) being in the selected second switch state in accordance with the sequence in which the first control means (126) sets the first and second starter switching elements (131, 152).

8. The engine control device as claimed in Claim 7, wherein the second control means (126) includes at least one processor, and wherein the processor is operable to set at least one of the starter switching elements (131, 152) in response to the abnormality signal.

9. The engine control device as claimed in any one of Claims 1 to 8, wherein the control switch is a pushbutton (27).

10. A method for controlling an engine starter motor (139) in a vehicle of the type having a power supply circuit for supplying power to the starter motor (139) and at least two starter switching elements (1310, 152) serially connected in the power supply circuit, the method comprising the steps of:
detecting the value of at least one condition in the vehicle,
setting the first starter switching element (131) to a selected first switch state and setting the second starter switching element (152) to a selected second switch state, wherein at least one of the starter switching elements is set in response to the detected condition,
detecting a voltage level at a connection point (P) defined between the first and second starter switching elements (131, 152); and
generating a fault signal if the voltage level detected at the connection point (P) is not the voltage level corresponding to the first starter switching element (131) being in the selected first switch state and the second starter switching element (152) being in the selected second switch state.

11. The method as claimed in Claim 10, wherein the detected condition is the activation of a signal generated by a driver-operated switch (27).

12. The method as claimed in Claim 10, wherein the detected condition is a condition of the vehicle's engine.

13. The method as claimed in any one of Claims 10 to 12, further comprising the step of setting at least one of the first and second starter switching elements (131, 152) in response to the fault signal.
